# EUROPEAN PATENT APPLICATION

(11) **EP 1 863 122 A1**
(43) Date of publication of application: **05.12.2007**
(21) Application number: 06011189.5
(22) Date of filing: 31.05.2006
(51) Int. Cl.: H01Q 1/22, H01Q 13/02, G01F 23/284

(54) **Horn antenna for a radar device**

(71) Applicant: Siemens Milltronics Process Instruments Inc., ON K9J 7B1 Peterborough (CA)
(72) Inventor: Duivenvoorden, Jos, Trent River ON K0L 2Z0 (CA); McKeen, John, Dr., Bridgenorth K0L 1H0 (CA)
(74) Representative: Berg, Peter

(57) **Abstract**

A known horn antenna for a radar device has a cone-shaped part of dielectric material and a conductive coating applied on the circumferential surface of said part.

To adapt the antenna for use in environments with high temperatures, the conductive coating (20) comprises a trench structure (23) in at least a portion of the circumferential surface which is closer to the wide end (22) of the cone-shaped part. Preferably, the trench structure (23) is formed to give the conductive coating (20) a spiral shape (21).

## Description

The invention relates to a horn antenna for a radar device such as, for example, a radar-based level measuring device, said horn antenna having a cone-shaped part of dielectric material and a conductive coating applied on the circumferential surface of said part.

Such a horn antenna is known from US 6,661,389.

By means of a horn antenna, which also is known as cone antenna, microwave pulses are radiated, which have been generated by HF energy coupled in. In a combined transmitting and receiving system of a level measuring device equipped with such an antenna, the pulses reflected by a filling product are detected, and the distance from the filling product is assessed by measuring the transit time of these pulses. Radar-based level measuring devices are, for example, used for a continuous level measurement of fluids, as well as of bulk goods or a combination of such products.

In radar devices basically two different antenna types are used: horn antennas and rod antennas.

For antennas which are not exposed to a heavy chemical load metallic horns or cones preferably of stainless steel are used. If the filling product to be measured is, for purity reasons, not allowed to get in contact with metal, it is known to provide the metallic horn antenna with a protective layer which is corrosion-proof and permeable for microwaves. Such metallic horn antennas provided with a protective layer, however, cannot be used in the food sector due to their multipart mechanical structure, since there, a good cleanability is often required.

In this case, dielectric rod antennas are used, which are manufactured massive from chemically highly resistant PTFE. However, rod antennas have various disadvantages compared to the horn antennas. So, their function can be highly influenced by a condensate present on their surfaces. Due to the large active and mechanical length of rod antennas, they are only to a limited extent suitable for being built into a fitting of a vessel. Moreover, the performance of rod antennas cannot be enhanced in an arbitrary manner and their directional characteristic is less favorable than that of horn antennas. The higher the transmitting frequency, the more important become the previously mentioned problems with rod antennas. Horn antennas, in contrast, can be used without difficulty for higher frequencies, they just by adapting their dimensions.

From the above-mentioned US 6,661,389 a horn antenna is known, in which the horn is made of metal and completely enclosed by or embedded in a dielectric material. The dielectric material moreover fills up the hollow space of the horn antenna and forms a cylinder on outside. The horn antenna's opening is closed with the dielectric material, which can be configured as a planar face perpendicular to the principal radiation direction of the horn antenna or as a concave or convex face of a dielectric lens. Alternatively, the horn antenna is entirely formed of a dielectric material, wherein the metallic envelope of the horn antenna is obtained by applying a conductive layer or coating on the outside of the dielectric form. The conductive layer may be applied by vacuum metallization, galvanization, printing or painting, and can be provided with a further protective layer. Thus, the metallic antenna envelope is protected against aggressive atmospheres or media.

In environments of high temperature or high temperature changes, a problem occurs in that the thermal expansion coefficient of the dielectric material and the metallic envelope of the horn antenna are different. As the temperature changes from a low to a high value a high mechanical stress is applied by the horn to the low dielectric material. The low dielectric material moves and changes shape which alters the focus of the radar wave. Also the dielectric material can shear from the metal horn causing it to flake, or air spaces can occur between the dielectric material and the metal horn resulting in poor radar performance. If the metallic envelope of the horn antenna is formed of a conductive layer on the outside of a dielectric conical form, the layer can tear at any point thus reducing the radar performance.

Hitherto, the applicant has used a single solid metal horn. A strong or rigid low dielectric material is glued into the base or small section of the horn where the stresses due to the thermal expansion coefficient are not so large. A more flexible softer low dielectric material has a thread shape at its base and is screwed into the stronger material. The softer low dielectric material is allowed to expand and contract along the horn, while the harder dielectric material is holding the strong dielectric material in the horn.

The object of the present invention is to provide a horn antenna which, by avoiding the above mentioned temperature-related drawbacks, has a simple structure and can thus be produced cost-effectively.

This problem is solved according to the invention by the features of claim 1.

Preferred embodiments of the horn antenna according to the invention are specified in the remaining claims.

Thus, the subject of the invention is a horn antenna for a radar device having a cone-shaped part of dielectric material and a conductive coating applied on the circumferential surface of said part, wherein the conductive coating comprises a trench structure in at least a portion of the circumferential surface which is closer to the wide end of the cone-shaped part and, thus, is more exposed to high temperatures.

The trench structure divides the conductive coating into more or less contiguous coating portions and thus allows relief of stress associated with the different thermal expansion coefficients of the dielectric material and the conductive coating. Therefore, the conductive coating does not need to be chosen from materials, such as conductive plastics, having similar thermal expansion coefficients as the dielectric material. Instead, the conductive coating can comprise any suitable metal, which can be plated onto the circumferential surface of the cone-shaped part.

In a preferred embodiment of the invention, the trench structure is formed to give the conductive coating a spiral shape.

Conical spiral antennas for transmitting circular polarized microwaves are widely known, such as from US 4,675,690, however, these antennas are no horn antennas because they radiate the microwaves at the small end of the cone which, in addition, does not form a hollow space.

As the temperature changes the dielectric cone-shaped part and the spiral-shaped conductive coating move together in direction of the length axis of the cone because the gap between the windings of the spiral allows the conductive coating to move without high mechanical stresses being created throughout the conductive coating due to different thermal expansion coefficients of the conductive coating and the dielectric material. Thus, the shape of the horn remains the same and the emission of the radar signal is not affected. The horn antenna can operate nroperly in all temperature ranges of the dielectric material without signal degradation in its output or reception.

A further advantage of the spiral-shaped conductive coating is that it comprises a single contiguous formation of conductive material which is less critical with regard to the frequency of the radar device than a discontiguous formation with detached coating portions.

In an alternative embodiment of the invention, the trench structure is formed to divide the conductive coating into a number of spaced-apart circumferential rings which can be closed or open.

In yet another alternative embodiment of the invention, the trench structure is formed to divide the conductive coating into a number of spaced-apart small-sized coating portions.

There, the optimal size of the rings or coating portions and the widths of the gaps therebetween change with different radar frequencies and must be exactly determined, e. g. by computer simulation analysis.

The conductive coating with its trench structure can be applied by vacuum metallization, galvanization, printing, painting or any other established method. Preferably, the conductive coating is first applied on the dielectric cone-shaped part and then machined off to form the trench structure, e. g. by a CNC turning machine. This advantageously allows to correctly produce the trench structure, e. g. the gap between the windings of the spiral, with an optimal width, which has been calculated in dependence on the frequency of the radar device.

To protect the conductive coating from corrosion and/or to prevent the conductive coating, especially metal, from contact with a measuring medium, such as food, the conductive coating can be covered or molded with a layer of dielectric material having at least approximately the same thermal expansion coefficient as the dielectric material of the cone-shaped part.

The invention will be now described by way of preferred examples and with reference to the accompanying drawing, in which:
- Fig. 1: shows in diagrammatic form a radar-based level measuring device with a horn antenna according to the present invention,
- Fig. 2: shows a first example of the horn antenna having a spiral-shaped conductive coating,
- Fig. 3: shows a cone-shaped part of the horn antenna at different temperatures,
- Fig. 4: shows a second example of the horn antenna having the conductive coating divided into a number of spaced-apart circumferential rings,
- Fig. 5: shows a third example of the horn antenna wherein the circumferential rings are open, and
- Fig. 6: shows a forth example of the horn antenna having the conductive coating divided into a plurality of spaced-apart small-sized coating portions.

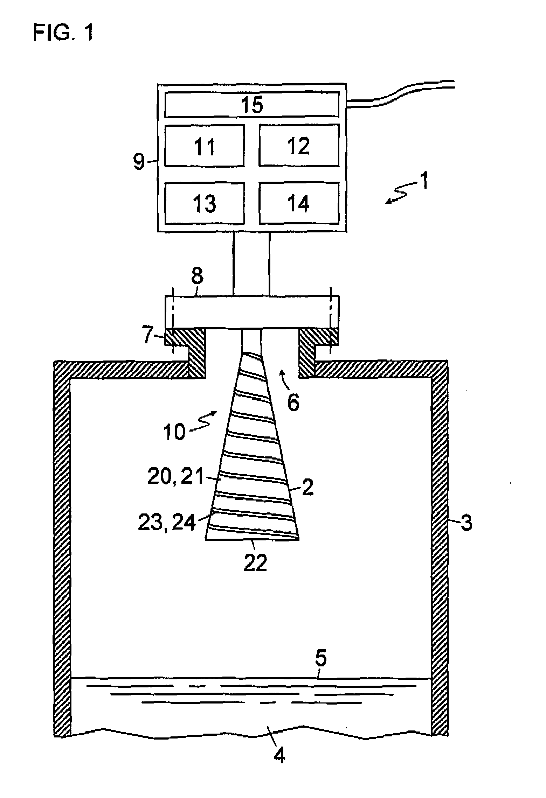

Reference is first made to Fig. 1 which shows in diagrammatic form a radar- or microwave-based level measuring device 1 with a horn antenna 2. The level measuring device 1 is mounted on top of a container, tank or vessel 3 which holds a material 4, such as liquid, slurry or solid, with a level determined by the top surface 5 of the material 4. The vessel 3 has an opening 6 with a flange 7 to which the level measuring device 1 is secured using a clamping or mounting ring 8. Of course, other suitable fastening means may be used as will be familiar to those skilled in the art. The level measuring device 1 comprises a housing or enclosure 9 and a transducer 10. The housing 9 holds electrical/electronic circuitry as described below. The transducer 10 extends into the interior of the vessel 3 and comprises the horn antenna 2.

The housing 9 of the level measuring device 1 includes a controller 11, such as a microcontroller, an analog-to-digital converter 12, a receiver module 13, a transmitter module 14 and a communication interface 15, such as a 4-20 mA current loop interface. The transducer 10 is coupled to the controller 11 through the transmitter module 14 and the receiver module 13. The controller 11 uses the transmitter module 14 to excite the transducer 10 to emit electromagnetic energy in the form of radar pulses or microwaves via the horn antenna 2. The top surface 5 of the material 4 reflects the radar pulses which are then coupled by the transducer 10 and converted by the receiver 13 into electrical signals. The received electrical signals are sampled and digitized by the analog-to-digital converter 12 for further processing by the controller 11. The controller 11 executes an algorithm which identifies and verifies the received signals and calculates the range of the reflective surface 5, i.e. the time it takes for the reflected pulse to travel from the reflective surface 5 to the antenna 2. From this calculation, the distance to the surface 5 of the material 4 and thereby the level of the material 4 in the vessel 3 is determined. The controller 11 also controls the transmission of data and control signals through the communication interface 15.

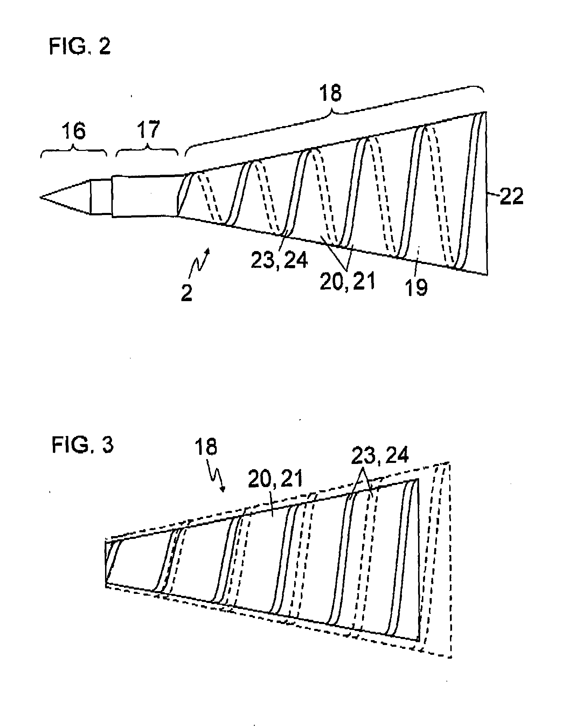

Reference is next made to Fig. 2, which shows in more detail the horn antenna 2. The antenna 2 comprises an upper section 16, a middle section 17 and a lower section 18. The upper section 16 is mechanically coupled to the housing 9 and operatively coupled to a transducer interface in the level measuring device 1. The lower section 18 comprises a cone-shaped part 19 which launches the microwave energy waves or pulses into the vessel 3 and receives the reflected pulses. The middle section 17 rests or is seated in the mounting ring 8 and can, for that purpose, be provided with a thread. The horn antenna 2 and the mounting ring 8 can also be integrally formed as a single piece.

The horn antenna 2 is formed of a dielectric material, such as polytetrafluoroethylene (PTFE), which is suitable for conducting microwave or radar energy pulses. The circumferential surfaces of the middle section 17 and the cone-shaped part 19 are provided with a conductive coating 20, preferably a plated metal layer. The conductive coating 20 is of spiral shape 21 on the cone-shaped part 19 or at least on that portion of it, that is closer to its wide end 22 where mechanical stresses due to high temperatures and different thermal expansion coefficients of the conductive coating 20 and the dielectric material of the conical part 19 are highest. In order to obtain the spiral shape 21 of the conductive coating 20, a trench structure 23 in form of a circumferential spiral-shaped groove 24 is machined into the coating 20, thus electrically separating the windings of the conductive spiral 21.

The conductive coating 20 can be covered with an additional layer, not shown here, of dielectric material having at least approximately the same thermal expansion coefficient as the dielectric material of the cone-shaped part 19.

The wide end 22 of the cone-shaped dielectric part 19 of the horn antenna 2 can be planar or of any other suitable shape to modify the antenna's radiation pattern.

Fig. 3 shows in a strongly simplified manner the cone-shaped dielectric part 19 at a lower temperature (solid line) and at a higher temperature (dashed line). As the temperature changes the dielectric cone-shaped part 19 and the conductive spiral 21 move together in direction of the length axis of the cone because the groove 24 between the windings of the spiral 21 allows the conductive coating 20 to move without high mechanical stresses due to the different thermal expansion coefficients of the conductive coating 20 and the dielectric material. The shape of the cone 19 remains the same and the emission of the radar signal is not affected.

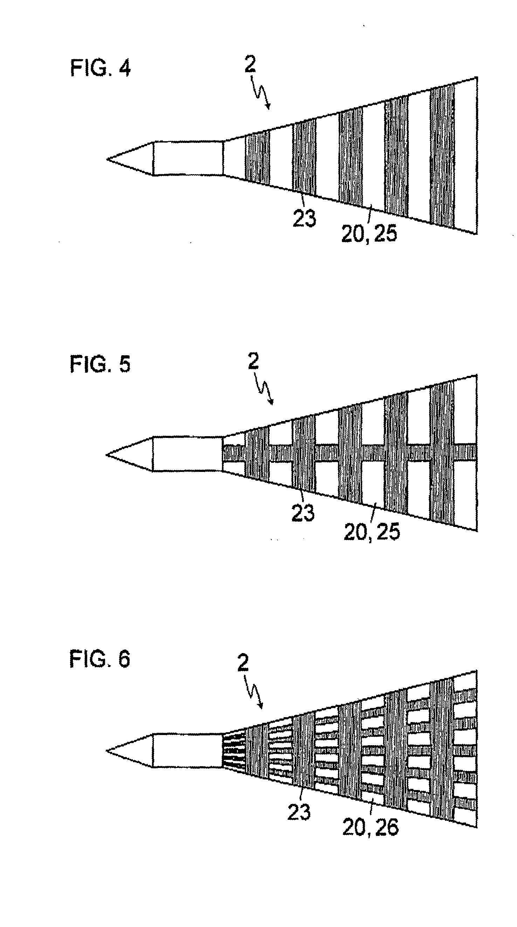

Fig. 4 shows another embodiment of the horn antenna 2 according to the invention wherein the trench structure 23 is formed to divide the conductive coating 20 into a number of spaced-apart circumferential rings 25 which can be closed or, as shown in Fig. 5, open.

Fig. 6 shows yet another embodiment of the horn antenna 2 wherein the trench structure 23 is formed to divide the conductive coating 20 into a plurality of spaced-apart small-sized coating portions 26.

The width of the trench structure 23, i. e. the size of the rings 25 or coating portions 26 as well as the widths of the gaps therebetween, is defined in dependence on the frequency of the radar device 1.

The trench structure 23 allows relief of stress due to differences in rates of thermal expansion between the conductive coating 20 and the dielectric cone 19.

## Claims

1. A horn antenna (2) for a radar device (1) having a cone-shaped part (19) of dielectric material and a conductive coating (20) applied on the circumferential surface of said part (19), **characterized in that** the conductive coating (20) comprises a trench structure (23) in at least a portion of the circumferential surface which is closer to the wide end (22) of the cone-shaped part (19).

2. The horn antenna according to claim 1, **characterized in that** the trench structure (23) is formed to give the conductive coating (20) a spiral shape (21).

3. The horn antenna according to claim 1, **characterized in that** the trench structure (23) is formed to divide the conductive coating (20) into a number of spaced-apart circumferential rings (25).

4. The horn antenna according to claim 3, **characterized in that** the circumferential rings (25) are open.

5. The horn antenna according to claim 1, **characterized in that** the trench structure (23) is formed to divide the conductive coating (20) into a plurality of spaced-apart small-sized coating portions (26).

6. The horn antenna according to any one of the preceding claims, **characterized in that** the conductive coating (20) comprises a metal plated onto the circumferential surface of the cone-shaped part (19).

7. The horn antenna according to any one of the preceding claims, **characterized in that** the width of the trench structure (23) is defined in dependence on the frequency of the radar device (1).

8. The horn antenna according to any one of the preceding claims, **characterized in that** the conductive coating (20) is covered with a layer of dielectric material having at least approximately the same thermal expansion coefficient as the dielectric material of the cone-shaped part (19).
